(19) Europäisches Patentamt / European Patent Office / Office européen des brevets

(11) **EP 4 502 388 A2**

(12) **EUROPEAN PATENT APPLICATION**

(43) Date of publication:
05.02.2025 Bulletin 2025/06

(21) Application number: 24192076.8

(22) Date of filing: 31.07.2024

(51) International Patent Classification (IPC):
*F04D 17/10* (2006.01)    *B64D 13/02* (2006.01)
*F04D 27/00* (2006.01)

(52) Cooperative Patent Classification (CPC):
F04D 27/001; B64D 13/02; F04D 17/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.07.2023 US 202318228400

(71) Applicant: United Airlines, Inc.
Chicago, IL 60606 (US)

(72) Inventors:
• Sindewald, Justin
Chicago, IL 60613 (US)
• Ling, Shuang
Chicago, IL 60625 (US)

(74) Representative: Lucke, Andreas
Boehmert & Boehmert
Anwaltspartnerschaft mbB
Pettenkoferstrasse 22
80336 München (DE)

(54) **CABIN AIR COMPRESSOR FAILURE ALERT SYSTEM**

(57) Systems and methods for failure prediction in a cabin air compressor (CAC) system including calculating an inlet and outlet air speed and an inlet and outlet energy of an airflow at an inlet and outlet of a CAC compressor. Further work of the CAC compressor motor is determined based on an input power of the CAC compressor motor, an inlet air speed of the CAC airflow, and a length of the CAC compressor flow path. Additionally, a CAC compressor efficiency is calculated as a ratio of the change in energy of the CAC airflow from an inlet to an outlet of the CAC compressor to the work of the CAC compressor motor. A comparison of the CAC compressor efficiency to a failure prediction model is performed to predict a failure state of the CAC.

FIG. 5

START

500

502 — CALCULATING A CHANGE OF ENERGY OF THE AIRFLOW ENERGY PASSING THROUGH A CAC SYSTEM

504 — CALCULATING A WORK OF THE CAC COMPRESSOR ON THE AIRFLOW

506 — CALCULATING A CAC COMPRESSOR EFFICIENCY

508 — PREDICTING A FAILURE STATE OF THE CAC SYSTEM

510 — FLAGGING THE CAC FOR MAINTENANCE

512 — INITIATING A MAINTENANCE ACTION

END

**EP 4 502 388 A2**

**Description**

FIELD

The present disclosure is related to a cabin air compressor failure alert system.

BACKGROUND

Many commercial aircraft cruise at altitudes between six and seven miles above sea level. Air pressure and oxygen content in the air at such altitudes is insufficient for humans to remain conscious. As a result, commercial aircraft are equipped with systems for pressurizing the aircraft cabin and/or fuselage. Such systems, in addition to providing adequate air pressure and oxygen, may also be configured to provide a comfortable flight experience. For example, such air pressurization systems can also assist in controlling the temperature in an aircraft fuselage during flight.

The systems designed to pressurize aircraft can vary by aircraft manufacturer or airplane type. These systems may include various compressors, sensors, heat exchangers, valves, and other components. Failure in such systems can result in inadequate air pressure and require the aircraft to land. In some larger aircraft, an aircraft can include several such systems for maintaining and controlling air pressure in an aircraft cabin. As a result, one system can be operated while the other is shut down until maintenance of the system can be completed.

SUMMARY

Disclosed herein is a computer-implemented method for failure prediction in a cabin air compressor (CAC) system. The method includes calculating, at one or more processors, an airflow speed upstream of a CAC compressor based on a mass flow rate the airflow and inlet pressure and inlet temperature of the airflow measured upstream of the CAC compressor inlet. The method also includes calculating, at the one or more processors, an airflow speed downstream of the CAC compressor based on the mass flow rate of the airflow, and an outlet pressure and an outlet temperature of the airflow measured downstream of the CAC compressor outlet. The method also includes calculating, at the one or more processors, an inlet energy of the airflow upstream of the CAC compressor based on the inlet airflow speed and the inlet temperature of the airflow and calculating, at the one or more processors, an outlet energy of the airflow downstream of the CAC compressor based on the mass flow rate of the airflow and the outlet temperature of the airflow. Additionally, the method includes calculating, at the one or more processors, work of a CAC compressor motor, coupled to the CAC compressor, based on an electrical input power of the CAC compressor motor, the airflow speed upstream of the CAC compressor, and a measured length of the CAC compressor flow path. The method also includes calculating, at the one or more processors, a change in energy of the airflow as a difference between the outlet energy and the inlet energy and calculating, at the one or more processors, a CAC compressor efficiency as a ratio of the change in energy of the airflow to the work of the CAC compressor motor. Based on the foregoing, the method includes predicting, at the one or more processors, a failure state of the CAC system based on a comparison of the CAC compressor efficiency to a failure prediction model.

In some variations, the method may further include flagging the CAC system for maintenance. In other variations, the method may include generating a maintenance action request, and sending the electronic maintenance action request to a remote computer for initiating a maintenance action. In such examples, the maintenance action may include performing a CAC system leak check or a CAC system debris inspection or a CAC motor power quality check or a breakaway torque check of the CAC.

Also disclosed herein is computer-implemented method of predicting a failure state of a cabin air compressor (CAC) system via sensor measurements outside the CAC system. The method includes receiving, at one or more processors, a first temperature of an airflow measured outside an aircraft; and a first pressure of the airflow, a second pressure of the airflow, a second temperature of the airflow, and a mass flowrate of the airflow, each measured inside the CAC system. Additionally, the method includes receiving an input power of a CAC compressor motor measured inside a CAC system, and calculating, at one or more processors, a theoretical work of the CAC compressor based on the inlet temperature of the CAC airflow at the CAC compressor inlet, a compressor pressure ratio of the CAC compressor, a specific heat capacity of the CAC airflow at the CAC compressor inlet, and a specific heat ratio of the CAC airflow at the CAC compressor inlet. The method further includes calculating, at one or more processors, a change of energy of the airflow from a first position upstream of the CAC compressor to a second position downstream of the CAC compressor based on the first temperature, the second temperature, the first pressure, and the second pressure. Based on the foregoing, the method includes calculating, at one or more processors, a CAC compressor efficiency as a ratio of the change in energy of the CAC airflow across the CAC compressor to the theoretical work of the CAC compressor; and predicting, at one or more processors, a failure state of the CAC based on comparing the compressor efficiency to a failure prediction model.

In some variations, the method includes controlling the CAC in response to the prediction of the failure state by initiating a maintenance action. Additionally, the method may include initiating a maintenance action such as performing a CAC system leak check or a CAC system debris inspection or a CAC motor power quality check or a breakaway torque check of the CAC.

Also disclosed herein is cabin air compressor (CAC) failure alert system. The system includes a CAC ducting system having an airflow received from outside an aircraft and a CAC compressor having an inlet and an outlet, the CAC compressor receiving the CAC airflow at the CAC compressor inlet. The system further includes one or more processors and one or more memories to: calculate energy of the airflow in the CAC airflow system at the inlet and the outlet of the CAC compressor, a work of the CAC compressor motor, a theoretical work of the CAC compressor, and an efficiency of the CAC compressor; and predict a failure state of the CAC system by comparing the efficiency of the CAC compressor to a failure prediction model.

In some examples, the processor may be further configured to initiate a maintenance action in response to predicting a failure state of the CAC system. In some such examples, the maintenance action may include a CAC system leak check or a CAC system debris inspection or a CAC motor power quality check or a breakaway torque check of the CAC. Additionally, in some examples, the system includes at least one temperature sensor.

Also disclosed herein is a computer-implemented method of using machine learning for failure prediction in a cabin air compressor (CAC) system. The method includes collecting, at one or more processors, CAC feature data comprising physical characteristics data of aircraft components of the CAC system, calculated CAC operation data, and/or calculated CAC efficiency data, the CAC feature data corresponding to aircraft runtime operation. The method further includes providing, by the one or more processors, the collected CAC feature data to a machine learning model trained using time series CAC feature training data comprising time series physical characteristics training data, time series calculated CAC operation training data, and time series calculated CAC efficiency training data, at least a portion of the time series CAC feature training data corresponding to CAC failure events, CAC performance degradation, and CAC performance normal, the machine learning model being trained to generate a CAC failure prediction score. The method may also include generating, using the machine learning model, the CAC failure prediction score and providing the CAC failure prediction score to a failure pattern analyzer. The failure pattern analyzer, by the one or more processors, applying a heuristic to the CAC failure prediction score to determine a CAC failure prediction; and generating a failure prediction report containing the CAC failure prediction, wherein generating the failure prediction report comprises storing, transmitting, and/or displaying the failure prediction reporting.

In some variations, generating the failure prediction report may include storing, transmitting, and/or displaying the failure prediction report including an identification of a predicted CAC failure and a predicted CAC failure timing. In such examples, generating the failure prediction report comprises storing, transmitting, and/or displaying the failure prediction report including an identification of a predicted failure type selected from the group consisting of a CAC compressor, CAC compressor motor, and a CAC ducting. Additionally, generating the failure prediction report may include storing, transmitting, and/or displaying the failure prediction reporting including an identification of a CAC predicted failure type.

In other variations, the physical characteristics data may include CAC speed, change in CAC speed over time, CAC mass flow rate, change in CAC mass flow rate over time, CAC outlet pressure, change in CAC outlet temperature over time, CAC outlet temperature, and change in CAC outlet temperature over time. Additionally, the calculated CAC operation data may include work of a CAC system, energy change of a CAC compressor, rolling data of the work of the CAC, and rolling data of the energy change of the CAC. Further, the CAC feature data may include a CAC efficiency and a rolling CAC efficiency rolling over time.

In yet other variations, the heuristic may be selected from the group consisting of: a prediction score threshold value, an average prediction score over time, a prediction score pattern over time, and a rate of change in prediction score. Additionally, in some examples, the method may include obtaining the time series CAC feature training data from one or more data stores and providing the time series CAC feature training data to train the machine learning model. In some such examples, the machine learning model comprises a gradient boosting model.

In some examples, the method may further include applying the obtained time series CAC feature training data to a feature selection pipeline that performs SHapley Additive exPLanations (SHAP) or recursive feature elimination (RFE) reducing a total number of CAC features in the time series CAC feature training data before providing the time series CAC feature training data to train the machine learning model.

Also disclosed herein is a non-transitory computer-readable medium, having stored thereon computer-executable instructions that, when executed by one or more processors cause a computer to collect CAC feature data comprising physical characteristics data of aircraft components of the CAC, calculated CAC operation data, and/or calculated CAC efficiency data, the CAC feature data corresponding to aircraft runtime operation. The instructions also cause the computer to provide the collected CAC feature data to a machine learning model trained using time series CAC feature training data comprising time series physical characteristics training data, time series calculated CAC operation training data, and time series calculated CAC efficiency training data, at least a portion of the time series CAC feature training data corresponding to CAC failure events, CAC performance degradation, and CAC performance normal, the machine learning model being trained to generate a CAC failure prediction score. The instructions further causing the computer to generate, using the machine learning model, the CAC failure prediction score and provide the CAC failure prediction score to a failure pattern analyzer; and by the failure pattern analyzer, apply a heuristic to the CAC failure prediction score to determine a CAC failure prediction. The instructions can the further cause the computer to generate a failure prediction report containing the CAC failure prediction, wherein generating the failure prediction report comprises storing, transmitting, and/or displaying the failure prediction reporting.

BRIEF DESCRIPTION OF THE DRAWINGS

The present disclosure may be best understood by reference to the following description taken in conjunction with the accompanying drawings, in which:

FIG. 1 illustrates a perspective view of an aircraft, in accordance with an example.

FIG. 2 illustrates a perspective view of a ram air inlet and a cabin air compressor inlet of the aircraft of FIG. 1, in accordance with an example.

FIG. 3 illustrates a schematic of a cabin air compressor system used in accordance with the present disclosure, in accordance with an example.

FIG. 4 illustrates a portion of the cabin air compressor system of FIG. 3 used in accordance with the present disclosure, in accordance with an example.

FIG. 5 is a flowchart illustrating an example method for predicting a failure state of a CAC compressor, in accordance with an example.

FIG. 6 is a flowchart illustrating an example method for calculating a change in energy of an airflow across the CAC compressor, in accordance with an example.

FIG. 7 is a flowchart illustrating an example method for calculating a work of the CAC compressor, in accordance with an example.

FIG. 8 is a block diagram of an exemplary system for operating a CAC health monitoring system, in accordance with an example.

FIG. 9 is a block diagram of another exemplary system for operating a CAC health monitoring system and having a trained machine learning framework, in accordance with an example.

FIG. 10 is a flowchart illustrating an example method for training the machine learning framework of FIG. 9, in accordance with an example.

FIG. 11 is a listing of ranked features that may be included in a training data set used to train the machine learning framework of FIG. 9, in accordance with an example.

FIG. 12 is a block diagram of an example machine learning architecture used in accordance an example.

The figures depict preferred embodiments for purposes of illustration only and are not to scale. One skilled in the art will readily recognize from the following discussion that alternative embodiments of the systems and methods illustrated herein may be employed without departing from the principles described herein.

DETAILED DESCRIPTION

Aircraft pressurization and air conditioning systems, including the Cabin Air Compressor (CAC) of the present disclosure, are vital components of modern commercial aviation. The CAC is fluidly coupled to a pneumatic air conditioning system (sometimes referred to as a "PACK system"). Without such pressurization systems, commercial flights would be restricted to substantially lower altitudes, and the aircraft cabin environment would be uncomfortable. To provide the necessary fuselage pressurization and comfortability, aircraft air conditioning systems include various compressors, heat exchangers, valves, sensors, and motors. Each component of the air conditioning system must operate properly for the air conditioning system to provide adequate air pressure at appropriate temperatures.

As referenced above, failure in CAC systems, while not common, can occur. Such failures can result in an aircraft being grounded, causing delays, expensive maintenance actions, and the like. Failure in the CAC system can result in uncomfortable flying experiences for passengers, including an uncomfortably warm cabin. The problem can be exacerbated in larger aircraft which may include several CAC systems, where degrading performance in one CAC may accelerate the degradation in another CAC which attempts to compensate for the performance drops.

Typically, CAC systems fail in some common ways. In some examples, the compressor bearings fail. If the bearings fail, the CAC compressor fails to properly spin and compress air and can be identified by abnormal efficiency or lack of temperature variations. Alternatively, the CAC system may experience leakage and can be identified by abnormal efficiency and uneven temperature variation between pairs of CAC compressors. Additionally, a CAC system can become clogged by debris which may be detected by abnormal efficiency and abnormal temperature variations on both CAC compressors of a pair of CAC compressors. Trying to detect failures and identify the particular failure type is technologically challenging. For example, to identify failure in the compressor bearings or compressor blades, a maintenance technician might need to physically inspect the components. Physical inspection of the components may be time consuming and require maintenance expertise in the overhaul of the CAC system.

The present techniques are able to overcome the technological challenges of conventional CAC systems. For example, in accordance with the present disclosure, identifying a failure in the CAC is possible without any direct sensor measurement readings relating to the state and operating condition of a compressor of a CAC. Further, using said indirect sensor measurement, it is possible to predict the failure of the CAC more than thirty cycles before the failure occurs. As used herein, the term, "cycle" corresponds to a flight of an aircraft including a takeoff, a cruise, and a landing. However, in various other examples, the failure prediction can be measured in days, flight hours, or any other comparable measurement.

In accordance with the teachings of the present disclosure, analysis of the efficiency of the CAC compressor can be used to predict failure of the CAC compressor. Furthermore, the efficiency of the CAC compressor can be measured without taking any direct sensor measurements of the CAC compressor but only relying on sensors already disposed in an aircraft air conditioning system.

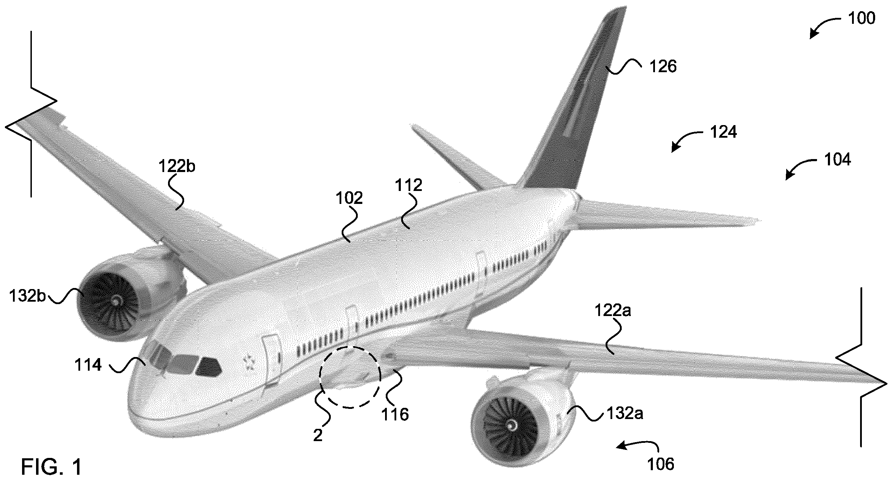

FIG. 1 illustrates an airplane 100, such as the Boeing 787, but could be any airliner or commercial aircraft. The airplane 100 includes an aircraft body 102, aerodynamic surfaces 104, and engines 106. However, in various examples, the airplane 100 could be any other airliner or a variant of the same airliner. In various examples, the airplane 100 could include various sensors and systems (not shown) common and typical in commercial airliners. These sensors and systems can include temperature and pressure sensors, configured to measure the ambient temperature and air pressure conditions. As used herein, ambient means relating to the immediate surroundings of the aircraft.

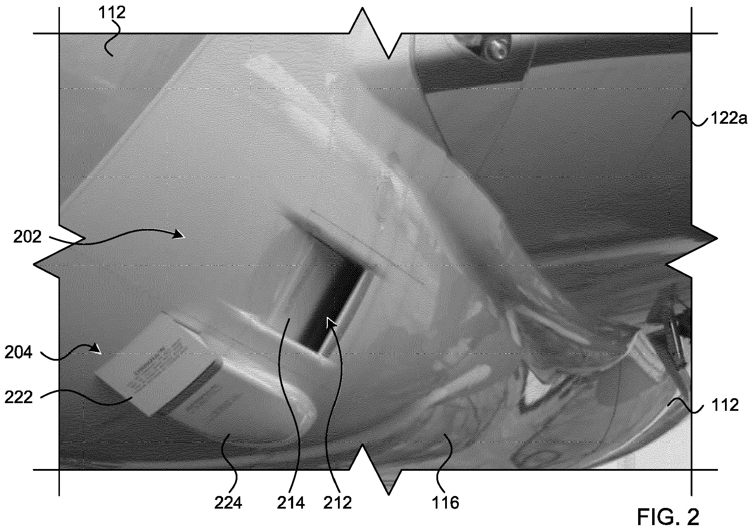

The aircraft body 102 includes a fuselage 112 having a cockpit 114. Additionally, the aircraft body 102 can include structural components, include a wing/body fairing 116 to couple the aerodynamic surfaces 104 to the aircraft body 102. The wing/body fairing 116 is a structural component configured to handle the stresses of transferring the lift forces generated on the aerodynamic surfaces 104 to the fuselage 112. Further, the wing/body fairing 116 can include various aircraft equipment described in greater detail in connection with FIG. 2.

The fuselage 112 could be configured to carry passengers and/or cargo. The airplane 100 is designed to fly at altitudes between approximately 30,000 feet (ft.) and 43,000 ft. altitude above sea level. At such altitudes, the aircraft body 102 needs to be pressurized for the health of all passengers and aircraft crew and also prevent hypoxia. For example, normal air pressure at sea level is approximately 14.7 pounds per square inch absolute (psia), while typical air pressure at 35,000 ft. is approximately 3.46 psia. The aircraft body 102 could be pressurized to an air pressure corresponding to between approximately 6,000 ft. (approximately 11.8 psia) and 8,000 ft. (approximately 10.9 psia) altitude above sea level. The airplane 100 can fly at a wide range of altitudes, and the properties of the air varies based on the altitude, as shown in Table 1.

Table 1

| Altitude (feet (ft.)) | Average Temperature (Fahrenheit (°F)) | Average Pressure (Pounds per square inch absolute (psia)) | Average Density (pounds per cubic foot (lbs./ft$^3$)) |
|---|---|---|---|
| o (Sea Level) | 59.0 | 14.7 | 0.077 |
| 20,000 | -12.3 | 6.8 | 0.041 |
| 30,000 | -47.8 | 4.4 | 0.039 |
| 35,000 | -65.6 | 3.5 | 0.024 |
| 40,000 | -69.7 | 2.7 | 0.019 |

(continued)

| Altitude (feet (ft.)) | Average Temperature (Fahrenheit (°F)) | Average Pressure (Pounds per square inch absolute (psia)) | Average Density (pounds per cubic foot (lbs./ft$^3$)) |
|---|---|---|---|
| 45,000 | -69.7 | 2.1 | 0.015 |

The aerodynamic surfaces 104 of the airplane 100 includes a first wing 122a, second wing 122b, horizontal stabilizers 124, and a vertical stabilizer 126. The aerodynamic surfaces 104 provide the necessary lift to get the airplane 100 airborne. Additionally, the aerodynamic surfaces 104 include control surfaces to control the attitude, yaw, and roll of the aircraft during flight. Such control surfaces can include, but are not limited to, ailerons, flaps, elevators, and rudders.

Additionally, the airplane 100 includes engines 106 configured to generate sufficient thrust for takeoff and cruise. In the example of FIG. 1, the airplane includes a first turbofan engine 132a and a second turbofan engine 132b. Although illustrated with two engines, the airplane 100 could be configured to fly with one engine, three engines, or four or more engines. Further, the engines 106 could be piston engines, turbojet engines, turboprop engines, or any other known aircraft engine.

FIG. 2 illustrates a ram air inlet 202 and a cabin air compressor (CAC) inlet 204 disposed on the wing/body fairing 116. In the present example, the ram air inlet 202 and the CAC inlet 204 are disposed on the wing/body fairing 116, but the ram air inlet 202 and/or the CAC inlet 204 can be disposed elsewhere on the aircraft body 102 or aerodynamic surfaces 104 of the airplane 100.

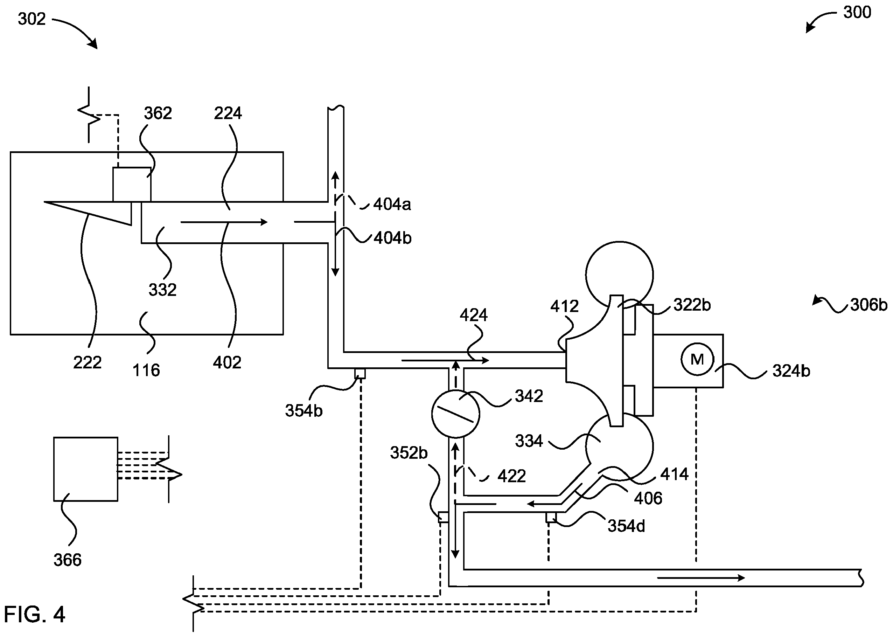

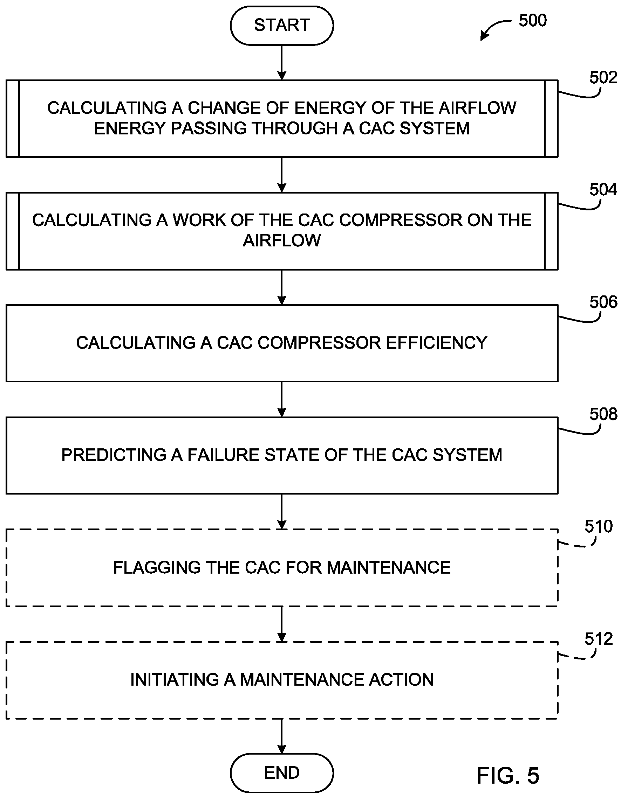

The ram air inlet 202 includes an inlet 212 and an inlet door 214. The inlet door 214 includes an actuator to control the inlet door 214 position relative to the inlet 212. By controlling the position of the inlet door 214 relative to the inlet 212, airflow through a ram airflow system (discussed in greater detail in connection with FIGS. 4 and 5) can be controlled. In some examples, the inlet 212 includes a minimum open area that remains open even when the inlet door 214 is fully actuated. In such examples, the inlet 212 can never be fully closed.

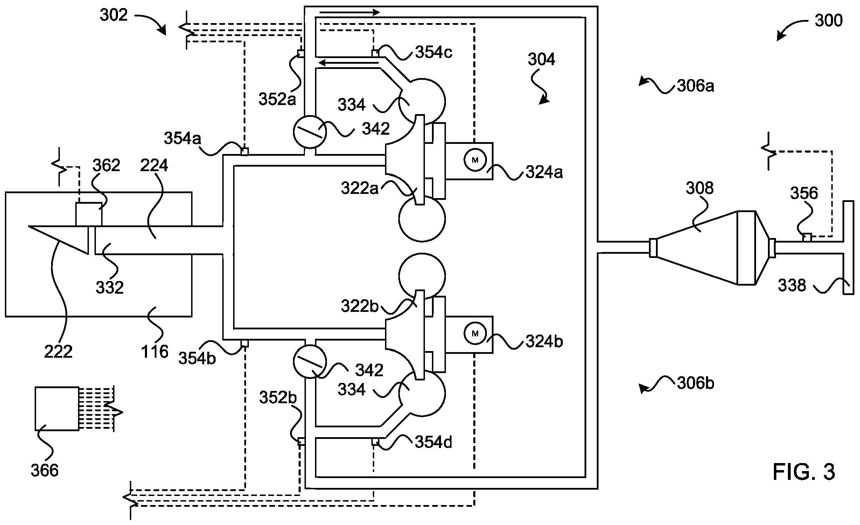

The CAC inlet 204 includes a CAC inlet deflector door 222 and an inlet 224. The CAC inlet deflector door 222 is actuatable to cover the inlet 224. When the inlet deflector door 222 is deflected out to cover the inlet 224, air does not pass into the CAC air system (discussed in greater detail in connection with FIGS. 3 and 4).

FIG. 3 illustrates a CAC system 300 which generally constitutes an air supply system for the airplane 100 of FIGS. 1 and 2. The example CAC system 300 includes ducting 302, compressors 304, and other air processing systems 308. In the example of FIG. 3, the CAC system 300 includes two compressors 304 and symmetrical ducting 302 having a first portion 306a and a second portion 306b. In various examples, the CAC system 300 could include asymmetrical ducting 302, only include a single compressor 304, or include more than two compressors 304. Additionally, the CAC system 300 could include air processing systems 308, such as an ozone converter, but could include any equipment necessary to process air before passing on to an Air Cycle Machine (ACM) system.

The CAC system 300 of the present example includes a first compressor 322a and a second compressor 322b powered by motor 324a and 324b, respectively. In some examples, only one compressor 322a, 322b is in operation while the other compressor 322a, 322b idles or is inactive. As discussed in greater detail in connection with FIG. 4, air enters the CAC system 300 through the inlet 224 at ambient pressure 332 and proceeds through the compressors 322a, 322b and is pressurized 334 before passing through ducting 338 to the ACM system. The ambient pressure 332, could be the ambient air pressure outside the airplane 100 during cruise at between approximately 30,000 ft. and approximately 40,000 ft. (e.g., approximately 4.3 psia to approximately 2.7 psia, respectively). And pressurized air 334 could be closer to the fuselage pressure (e.g., approximately 8 psia to approximately 11 psia). In some examples, the valves 342 can be opened to control the flow, pressure, and temperature of the air passing through the compressors 322a, 322b.

The CAC system 300 may further include sensors to assist in the control of the CAC system 300. For example, the CAC system 300 can include temperature sensors 352a, 352b, pressure sensors 354a, 354b, 354c, 354d, and flow sensors 356. The sensors 352a, 352b, 354a, 354b, 354c, 354d, 356, and any other sensor disposed on the aircraft could be used continuously or intermittently during flight, during takeoff and landing, while taxiing, during any other aircraft operation, and/or any combination of the foregoing. The pressure sensors 354a, 354b are disposed upstream of the CAC compressors 322a, 322b and can measure a pressure of air at ambient pressure 332 entering the CAC system 300 and pressure sensors 354c, 354d are disposed downstream of the CAC compressors 322a, 322b can measure a pressure of the pressurized air 334 exiting the compressors 324a, 324b. Additionally, the temperature sensors 352a, 352b are disposed downstream of the CAC compressors 322a, 322b and can measure the temperature of the pressurized air. In some examples, the CAC system 300 may further include temperature sensors upstream of the CAC compressors 322a, 322b or can measure the temperature of the airflow upstream of the CAC compressors 322a, 322b utilizing sensors disposed elsewhere on the surface of the airplane 100. If the temperature of the pressurized air 334 is too low, the valves 342 can be, at least partially, opened to further pressurize and increase the temperature of the pressurized air 334. Additionally, the flow sensor 356 can measure the flow rate of pressurized air 334 passing through the CAC system 300. If the flow rate of the pressurized air 334 is too high, the inlet deflector door can be actuated by actuator 362 to cover the inlet 224. Alternatively, if the flow rate is too low, the inlet deflector door can be actuated by actuator 362 to not cover the inlet 224.

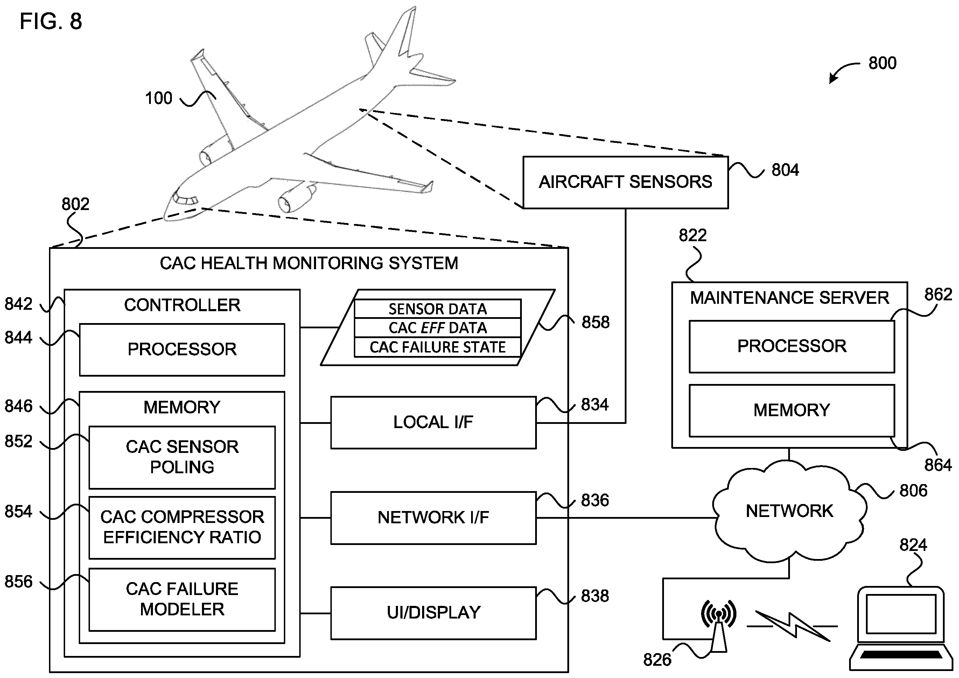

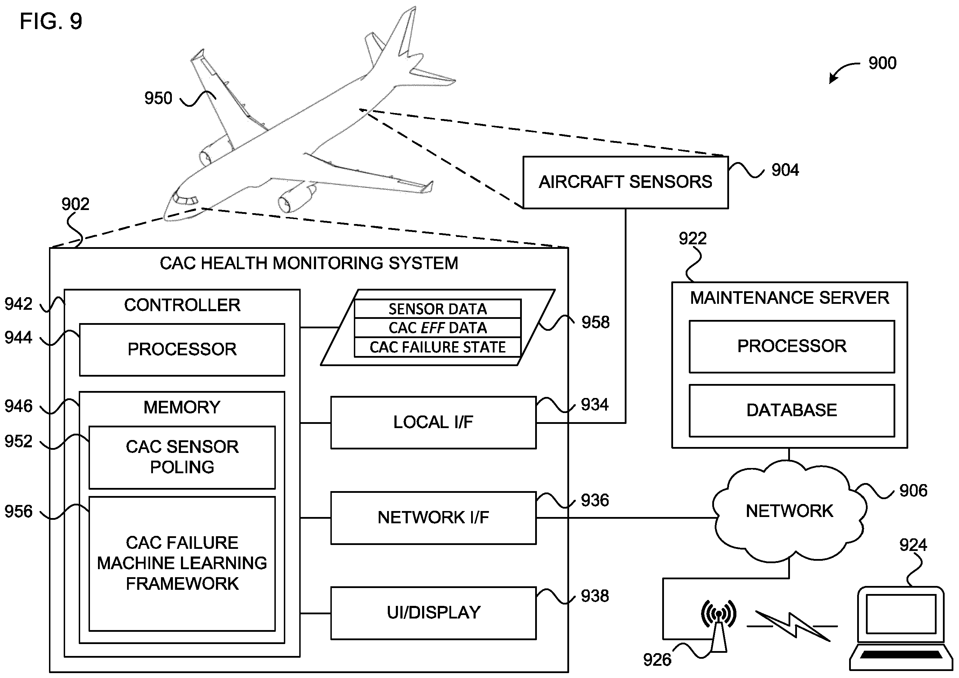

Additionally, the motors 324a, 324b and the actuator 362 in addition to the temperature sensors 352a, 352b, pressure sensors 354a, 354b, and flow sensor 356 (collectively, the CAC sensors) may be in electronic communication with a computing device 366 (discussed in greater detail in FIGS. 8 and 9). Additionally, the computing device 366 may send control signals to various components of the CAC system 300, such as the motors 324a, 324b, the actuator 362, and the valves 342. As a result, the computing device 366 can send a control signal to the actuator 362 to cover the inlet 224 to reduce flow rate in the CAC system 300 or to uncover the inlet 224 to increase flow rate. Alternatively, the computing device 366 can send a control signal to increase or decrease the pressure generated by compressors 322a, 322b by adjusting a speed of motors 324a, 324b respectively, or by opening the valves 342.

FIG. 4 illustrates airflow passing through and pressurized in the CAC system 300. By way of example, only the second portion 306b is illustrated, but in various examples, the operation of the first portion 306a operates in an identical or substantially identical manner. In other examples, the CAC system may include three or more portions, identical or substantially identical to the first and second portions 306a, 306b.

First, the CAC system 300 receives airflow 402 from outside the airplane 100 passing over the inlet deflector door 222 and into the inlet 224. The airflow 402 has properties identical to or substantially identical to the air properties (e.g., temperature, pressure, etc.) surrounding the airplane 100 and can be ascertained by sensor systems disposed elsewhere on the airplane 100.

The airflow 402 then splits into a first airflow 404a directed towards the first portion 306a (not shown in FIG. 4) and a second airflow 404b directed towards the second portion 306b. In some examples, if one portion (e.g., first portion 306a) of the CAC system 300 is deactivated or idling, most or all of the airflow 402 will pass to the activate portion (e.g., second portion 306b) of the CAC system 300. The pressure of the second airflow 404b is detected by the pressure sensor 354b. In some examples, the pressure detected by the pressure sensor 354b is the same as ambient pressure. In other examples, the pressure detected by the pressure sensor 354b is different than ambient because of an interruption in airflow entering compressor due to a stall-type condition or a debris blockage.

The second airflow 404b is passed through the second compressor 322b and expelled from the second compressor 322b as pressurized airflow 406. When the second compressor 322b is operating properly, the pressurized airflow 406 has a higher pressure and a higher temperature than the second airflow 404b. The pressure and temperature of the pressurized airflow 406 are measured via the pressure sensor 354d and the temperature sensor 352b. In some examples, the temperature of the pressurized airflow 406 is low. In such examples, the valve 342 is partially opened and a pressurized airflow 422 is mixed with the second airflow 404b. The pressurized airflow 422 mixes with the second airflow 404b and forms a mixed airflow 424. The mixed airflow 424 is warmer than the second airflow 404b, and when the mixed airflow 424 is passed through the second compressor 322b, the pressurized airflow 406 will be warmer when the mixed airflow 424 passes through the second compressor 322b compared to when the second airflow 404b, alone, passes through the second compressor 322b.

Additionally, in the present example, the second airflow 404b is upstream of an inlet 412 of the second compressor 322b and the pressurized airflow 406 is downstream an outlet 414 of the second compressor 322b. As a result, a first temperature and a first pressure (inlet temperature and inlet pressure) are measured upstream of the inlet 412. In contrast, the second temperature and second pressure (outlet temperature and outlet pressure) are measured downstream of the outlet 414.

As shown in FIG. 3, the pressurized airflow 406 passes through an air processing system 308 and the flow rate of the pressurized airflow 406 is measured via the flow sensors 356. In some examples, the flow sensors 356 measure the volumetric flow rate of the pressurized airflow 406 while in other examples, the flow sensors 356 measure a mass flow rate of the pressurized airflow 406.

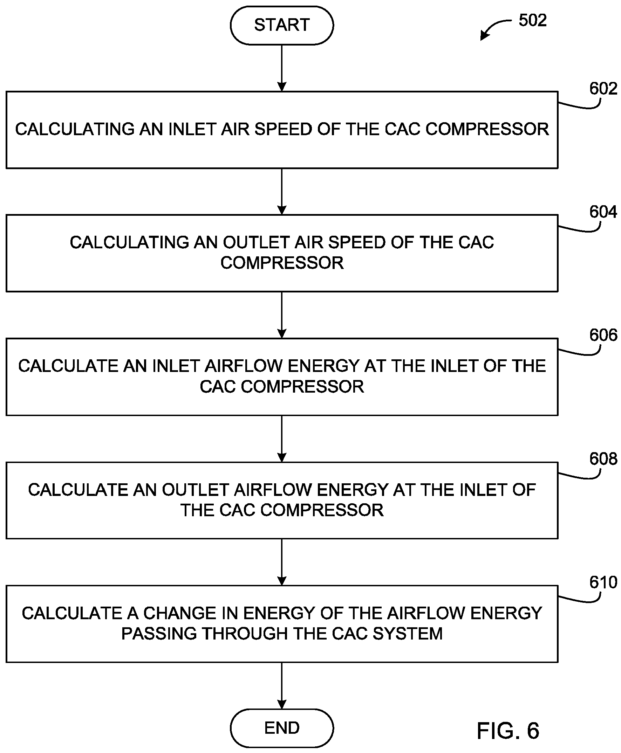

FIGS. 5-7 illustrate example methods for failure prediction in a cabin air compressor (CAC) system, such as the CAC system 300 of FIGS. 3-4. FIG. 5 illustrates a method 500 for failure prediction in the CAC, with FIGS. 6-7 illustrate example implementations of various processes in the method 500. While the method 500 is described as including steps performed once and in a particular order, in various other examples, the processes of the methods in FIGS. 5-7 can be reordered and/or performed multiple times. Additionally, the methods in FIGS. 5-7 can, in various examples, be performed by the CAC health monitoring system 802 described in greater detail in connection with FIG. 8. For example, a processor 844 of the CAC health monitoring system 802 can perform all calculations described in connection with FIGS. 5-7. The methods described in connection with FIGS. 5-7 are described with reference to the second portion 306b of the CAC system 300 but is equally applicable to the first portion 306a of the CAC system 300.

At a block 502, the method 500 includes calculating a change in energy of the airflow passing through the CAC system 300. As discussed in greater detail in connection with FIG. 6, calculating the change in energy includes calculating an average velocity of the airflow and an energy of the airflow at the inlet 412 and the outlet 414.

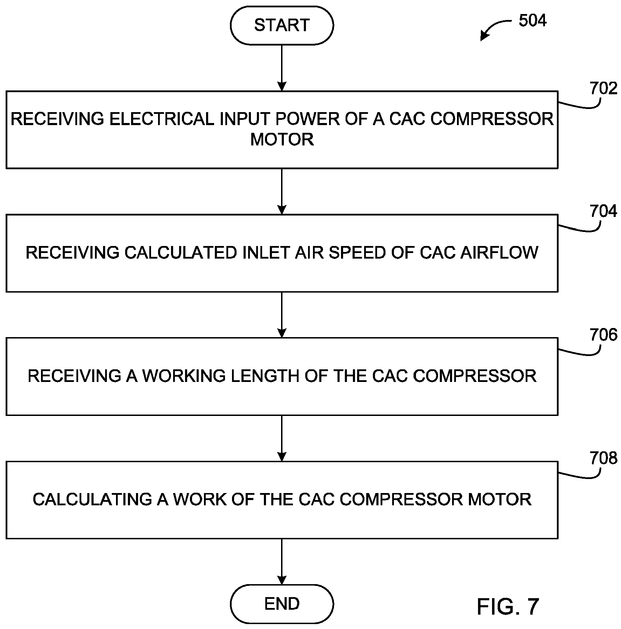

At block 504, the method 500 includes calculating a work of the CAC compressor on the airflow. As described in greater detail in connection with FIG. 7, calculating the work of the CAC compressor 322b includes receiving power measurement data of the CAC compressor motor 324b and calculating the airflow velocity at the inlet 412 of the CAC compressor. But, in various examples, the work of the CAC compressor can be calculated in other ways. For example, the work of the CAC compressor can be calculated based on the inlet temperature of the airflow at the inlet of the compressor, the compressor pressure ratio of the compressor, and the properties of the airflow.

At block 506, the method 500 includes calculating the efficiency of the CAC compressor. In the method 500, the efficiency of the second compressor 322b is calculated as the quotient of the change in energy of the airflow and the work of the second compressor 322b, as shown in Equation 1, below. In the present example, the change in energy was calculated at block 502 and the work of the second compressor 322b was calculated at block 504. In other examples, the efficiency is calculated as a ratio of the change in energy of the airflow to the theoretical compressor work.

$$\varepsilon = \frac{\Delta E_{cac}}{W_{cac\_motor}}$$

Equation 1

At block 508, the method 500 includes predicting a failure state of the CAC system 300. In some examples, predicting a failure state identifies that an issue with the CAC may cause some form of mechanical failure soon. Alternatively, predicting a failure state may include specifically identifying a component or type of failure. In either example, the efficiency of the second compressor 322b or the CAC system 300 is compared to a failure prediction model. If the efficiency or trend in efficiency sufficiently matches a failure prediction model, the method predicts a failure in the CAC system 300.

In some examples, the method 500 includes, at block 510, flagging the CAC system 300 for a maintenance action. This involves identifying the CAC compressor 322b as an airplane 100 component in need of future repair. In some examples, the maintenance action includes an automated analysis or test that can be performed by a computer system disposed on the airplane 100. Additionally or alternatively, flagging the CAC system 300 for maintenance action notifies a technician of the potential failure.

Additionally, the method 500 may include, at block 512, initiating the maintenance action. In some examples, the maintenance action could be entirely controlled via a computer or robotic system. Alternatively, the maintenance action could include any variety of manual inspection and repair procedures including, for example, system leak check, a system debris check or inspection, a CAC motor power quality check, and/or a breakaway torque check of the first and/or second compressors.

FIG. 6 illustrates an example of how block 502 of the method 500 can be performed. In this example, the block 502 includes first sub-block 602 to calculate airflow speed at an inlet 412 of the second compressor 322b. The average inlet velocity can be calculated by, for example, Equation 2. Sub-block 604 includes calculating the airflow speed at an outlet 414 of the second compressor 322b. the average outlet velocity can be calculated by, for example, Equation 3. In Equation 2 and Equation 3, $\dot{m}_{cac}$ is the mass flow rate of the pressurized airflow 406, measured by the flow sensor 356. In various examples, to calculate the velocity pressure and temperature of the airflow may be received from sensors disposed on the airplane 100 or CAC system 300 (e.g., temperature sensor 352a, 352b and pressure sensors 354a, 354b, 354c, 354d) Additionally, as shown in both Equation 2 and Equation 3, the density of the airflow at the inlet 412 and the outlet 414 can be calculated as the quotient of the airflow pressure divided by the product of the gas constant and the temperature.

$$\bar{V}_{cac\_in} = \frac{\dot{m}_{cac}}{\rho_{cac\_in} \times A_{cac\_in}} = \frac{\dot{m}_{cac}}{\left(\frac{P_{cac\_in}}{R \times TAT}\right) \times A_{cac\_in}}$$

Equation 2

$$\bar{V}_{cac\_out} = \frac{\dot{m}_{cac}}{\rho_{cac\_out} \times A_{cac\_out}} = \frac{\dot{m}_{cac}}{\left(\frac{P_{cac\_out}}{R \times T_{cac\_out}}\right) \times A_{cac\_out}}$$

Equation 3

Additionally, sub-block 606 includes calculating an airflow energy, specifically the airflow energy at the inlet 412 of the second compressor 322b. At sub-block 608, the airflow energy at the outlet 414 of the second compressor 322b is calculated. The inlet airflow energy can be calculated based Equation 4 and the outlet airflow energy can be calculated based on Equation 5. In Equation 4, TAT is the temperature outside the aircraft while $T_{cac\_out}$ is the temperature at an outlet of the second compressor 322b. Each equation includes the corresponding airflow velocity at the inlet 412 and outlet 414 of the second compressor 322b, squared and divided by twice the gravitational constant ($g_c$).

$$E_{cac\_in} = (C_V)_{cac\_in} \times TAT + \frac{(\bar{V}_{cac\_in})^2}{2g_c}$$

Equation 4

$$E_{cac\_out} = (C_V)_{cac\_out} \times T_{cac\_out} + \frac{(\bar{V}_{cac\_out})^2}{2g_c}$$

Equation 5

The block 502 further includes calculating a change in energy of the airflow energy passing through the CAC system at block 610. In some examples, the change in energy is calculated as a difference between the energy at the outlet 414 of the second compressor 322b less the energy at the inlet 412 of the second compressor 322b as calculated at sub-blocks 606 and 608, respectively. In other examples, the change in energy could be normalized, as shown in Equation 6. As shown in Equation 6, the normalized difference in energy of the airflow energy at the outlet 414 of the second compressor 322b less the airflow energy at the inlet 412 of the second compressor 322b is divided by the airflow energy at the inlet 412 of the second compressor 322b.

$$\overline{E_{cac}} = \frac{E_{cac\_out} - E_{cac\_in}}{E_{cac\_in}}$$

Equation 6

FIG. 7 illustrates an example of how block 504 of the method 500 can be performed. At sub-block 702, data regarding the electrical input power of a CAC compressor motor can be received at a central processing computer (e.g., processor 844). In some various examples, the processor 844 may include sensors measuring the electrical input power of various components of the CAC system, including the CAC compressor motor (e.g., measuring current, voltage, etc.). In other examples, data regarding the electrical input power may be measured by a sensor disposed on the CAC compressor motor or between the processor 844 and the CAC compressor motor. Similarly, data regarding the air speed at the second compressor 322b inlet 412 can also be received at the central processing computer. In various examples, the inlet air speed was calculated at sub-block 602. Additionally, at sub-block 706, the central processing computer may receive or already have data regarding a working length of the second compressor 322b.

At sub-block 708, the block 504 may include calculating a work of the CAC compressor motor. The work of the CAC compressor motor 324b can be calculated based on Equation 7a & 7b, below. In Equation 7a, the input power (received at sub-block 702) is multiplied by the time the airflow is in the working length of the second compressor 322b. In Equation 7b, a linear approximation is used to calculate the time the airflow is in the working length of the second compressor by taking the quotient of the working length of the second compressor 322b divided by the inlet airflow velocity (calculated at sub-blocks 706 and 704, respectively). In other examples, the work of the second compressor 322b and/or compressor motor 324b can be calculated based on the inlet temperature of the compressor, the compressor pressure ratio of the compressor, and properties of the airflow as shown in Equation 8.

$$W_{cac\_motor} = P_{cac\_motor} \times t$$

Equation 7a

$$W_{cac\_motor} = P_{cac\_motor} \times \frac{d_{cac}}{\overline{V}_{cac\_in}}$$

Equation 7b

$$W_{cac} = (C_p)_{cac\_inlet} \times T_{cac\_inlet} \times (CPR^{\frac{\gamma-1}{\gamma}} - 1)$$

Equation 8

As described above, the change in energy of the airflow and the work of the CAC motor (from Equation 7) are used in Equation 1 to calculate the efficiency of the CAC compressor. In other examples, the change in energy of the airflow and the theoretical work of the CAC (from Equation 8) are used in Equation 1 to calculate the efficiency of the CAC compressor.

FIG. 8 is a block diagram of an exemplary system 800 for operating a CAC health monitoring system 802 on, for example, airplane 100. In various examples, the CAC health monitoring system 802 may be part of the computing device 366. In the example of FIG. 8, the CAC health monitoring system 802 is disposed on the airplane 100, however in some examples, the CAC health monitoring system 802 could be partially or fully disposed on a server disposed remote from the airplane 100. In various examples, the CAC health monitoring system 802 could interact with aircraft sensors 804 and a network 806. In other examples, the CAC health monitoring system 802 could interact with more aircraft systems.

Network 806 may be a single wireless network or may include multiple cooperating and/or independent networks of one or more types (e.g., a cellular telephone network, a wireless local area network (WLAN), the Internet, satellite communication, etc.). The ACM health monitoring system 802 may be in communication with a maintenance server 822 via network 806. Additionally and/or alternatively, the network 806 can communicatively connect the CAC health monitoring system 802 with a remote computer system 824 via transceiver 826. While FIG. 8 shows only a single airplane 100, it is understood that maintenance server 822 may communicate (e.g., via network 806) with a fleet of aircraft (*e.g.,* one or more other aircraft similar to airplane 100) and/or other entities (e.g., third party servers that are not affiliated with the entity owning, maintaining, and/or using the airplane 100 and/or the maintenance server 822). As used herein, the term "server" may refer to a single server, or multiple servers communicating with each other.

The CAC health monitoring system 802 includes a controller 842, a local interface 834, and a network interface 836. In various examples, the local interface 834 and the network interface 836 may be wired interfaces (e.g., Ethernet cables, USB cables, etc.) or wireless interfaces (e.g., WiFi, Bluetooth, etc.). In various examples, the local interface 834 may communicatively couple the ACM health monitoring system 802 with aircraft sensors 804 and/or other airplane 100 systems. The aircraft sensors 804 may include the CAC sensors. Additionally, the network interface 836 connects the airplane 100 with the network 806 and, by extension the maintenance server 822 and/or other remote computer systems 824. Additionally, the CAC health monitoring system 802 may include a user interface 838 that may include a local display. For example, the user interface 838 could be a part of the airplane 100 cockpit and could include screens and various buttons to control the CAC health monitoring system 802. As a result, a pilot or other airplane 100 crew member can locally control and interact with the CAC health monitoring system 802 via the user interface 838.

The CAC health monitoring system 802 includes a controller 842 having a processor 844 and a memory 846. In various examples, the processor 844 and/or the memory 846 may be typical computer processors and/or memory, but in other examples the processor 844 and/or memory 846 may be custom built for use on airplane 100. The memory includes various programs adapted to operate the CAC health monitoring system 802.

The memory 846 may include a CAC sensor poling system 852, an CAC compressor efficiency ratio calculator 854, and a CAC failure modeler 856. The CAC sensor poling system 852 is configured to request and/or receive sensor data from the aircraft sensors 804. The CAC sensor poling system 852 may then store sensor data in a separate, sensor database 858. The CAC compressor efficiency ratio calculator 854 performs the necessary calculations to determine the CAC compressor efficiency ratio, for example implementing the processes and methods described and illustrated herein. In various examples, the CAC compressor efficiency ratio calculator 854 may be configured to perform the method 500. Lastly, the CAC failure modeler 856 receives CAC compressor efficiency ratio calculations from the CAC compressor efficiency ratio calculator 854. The CAC failure modeler 856 is configured to model and predict failure in various CAC compressor components based on the CAC compressor efficiencies, for example implementing the processes and methods described and illustrated herein.

In various examples, the processor 844 accesses memory 846 to run the CAC compressor efficiency ratio calculator 854 and/or the CAC failure modeler 856. As a result, the processor 844 can access the CAC compressor efficiency ratio calculator 854 to calculate energy of the air in the CAC airflow system at the inlet 412 and the outlet 414 of the CAC compressor 322b, a rotational kinetic energy of the CAC compressor 322b, and/or an efficiency of the CAC compressor 322b. Additionally or alternatively, the processor 844 can access the CAC failure modeler 856 to predict a failure state of the CAC compressor by comparing the efficiency of the CAC compressor to a failure prediction model.

Additionally, the system 800 includes the maintenance server 822 which may be disposed at an airplane 100 hanger or central facility. The maintenance server 822 may include a processor 862 and a memory 864. In various examples, the CAC sensor poling 852, CAC compressor efficiency ratio calculator 854, and CAC failure modeler 856 are fully disposed on the maintenance server 822. As a result, the CAC health monitoring system 802 may still maintain a sensor database 858 and provide sensor data to the maintenance server 822 when the network interface 836 is connected to the network 806.

While in the exemplary system 800, the airplane 100 includes the CAC health monitoring system 802 that utilizes a CAC compressor efficiency ratio calculator 854 and an CAC failure modeler 856, in other examples, CAC health monitoring may be achieved in a trained machine learning framework. FIG. 9, for example, illustrates a system 900 that may be implemented on an airplane 950 and that includes a CAC health monitoring system 902 having elements similar to that of the CAC health monitoring system 802, but that relies upon a trained CAC failure machine learning framework 956 within a memory 846.

The CAC health monitoring system 902 includes a controller 942 having a processor 944 and the memory 946, similar to the controller 842 of FIG. 8. Also, the memory 946 includes a CAC sensor poling system 952 similar to the CAC sensor poling system 852. Similar to the system 802, the CAC health monitoring system 902 may be disposed on the airplane 950. Although in some examples, all or part of the CAC health monitoring system 902 may be implemented on a server remote from the airplane 950. In the illustrated examples, the CAC health monitoring system 902 interact with aircraft sensors 904, such as CAC sensors. A network 906 may be provided to allow the CAC health monitoring system 902 to interact with more aircraft systems. The network 906, like the network 806, may be a single wireless network, or may include multiple cooperating and/or independent networks of one or more types (e.g., a cellular telephone network, a wireless local area network (WLAN), the Internet, satellite communication, etc.). In the illustrated example, a maintenance server 922 is shown coupled to the system 902 via the network 906, which may also communicatively coupled the to a remote computer system 924 via transceiver 926.

Returning to the memory 946, the CAC failure machine learning framework 956 may be trained to predict a failure state of at least one of the CAC compressor and the CAC motor. The CAC failure machine learning framework 956 may be implemented as one or more trained machine learning models or neural networks. The framework 956 may be implemented as gradient boosting models, random forest models, neural networks (NN), regression models, Naive Bayes models, a deep learning framework, or other machine learning algorithms (MLA). These machine learning algorithms may be supervised algorithms or non-supervised. In an example, the framework 1256 was implemented using an Extreme Gradient Boosting (XGB) model, available from XGBoost, which is an opensource software library that implements optimized distributed gradient boosting machine learning algorithm under the Gradient Boosting framework, as well as, other algorithms such as logistic regression. The framework 956 may be implemented in any number of other configurations that provide advanced modeling techniques. Other configurations for the framework 956 include a deep graph convolution model designed to isolate CAC system faults, attention-based convolutional neural networks (CNN), and anomaly detection networks for example those employing topological data analysis.

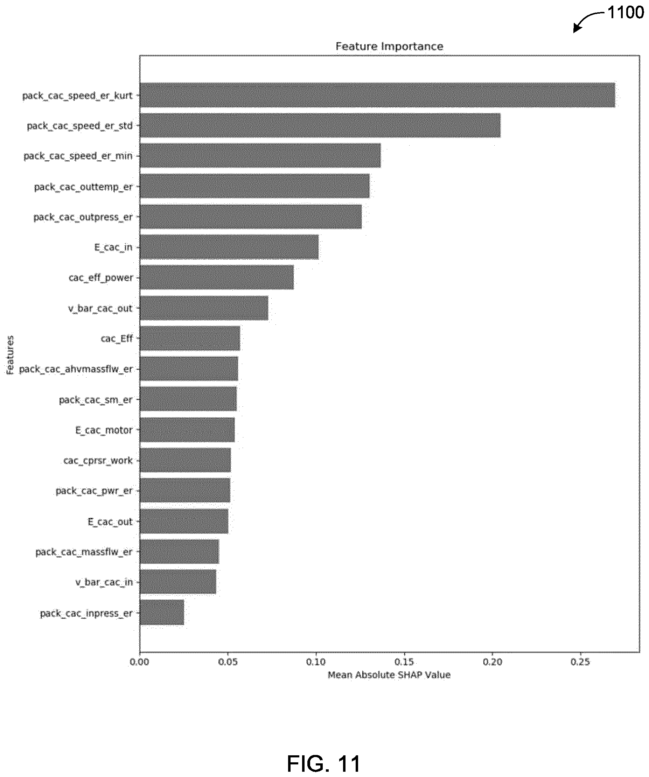

With attention-based CNNs, as well as with other configurations, the framework 1256 may be trained to receive streams of data and filter out background noise and/or other signal anomalies to allow for prediction analysis of relevant time windows of data in the received stream of data (including from different sensors). Such features are particularly useful in detecting ACM failure, as described in various examples herein. In some instances, a human may be able to label received image or video data. But such a process would be laborious and fraught with errors. Plus, identifying the particular windows of time during which useful data (as opposed to anomalous data) is present can be near impossible for a human, especially in situations where noise is high or when the time window is long. In training an attention-based CNN, labeled data may be used to train the framework, where labeling rules may be applied that do not require strict labeling of feature data. Instead, attention-based CNNs can focus on labeled activity among long sequences of sensor data, filtering out a large amounts of background noise signal to allow for more accurate classification from the CNN. Further, requirement of labeling the exact locations of feature data in the training data set may be avoided if the CNN is able to score or otherwise analyze more general locations of feature data. This can be particularly useful in examples where the training data set includes different types of feature data captured (and labeled) over different windows of time, such as the feature data 1100 shown in FIG. 11. The process of data collection and annotation for training purposes is able to produce a highly accurate CAC failure prediction framework.

With anomaly detection networks, the framework 956 may be configured with machine learning algorithms that provide topological based data analysis that are able to extract feature data from datasets that are high-dimensional, incomplete, and/or noisy. In such examples, training of the framework 956 may be achieved from a received streams of labeled training data (including data from different sensors that has been labeled), and the framework 956 may perform dimensionality reduction on the data to identify the most relevant feature data. Topology based data analysis can be used to effect such dimensionality reduction.

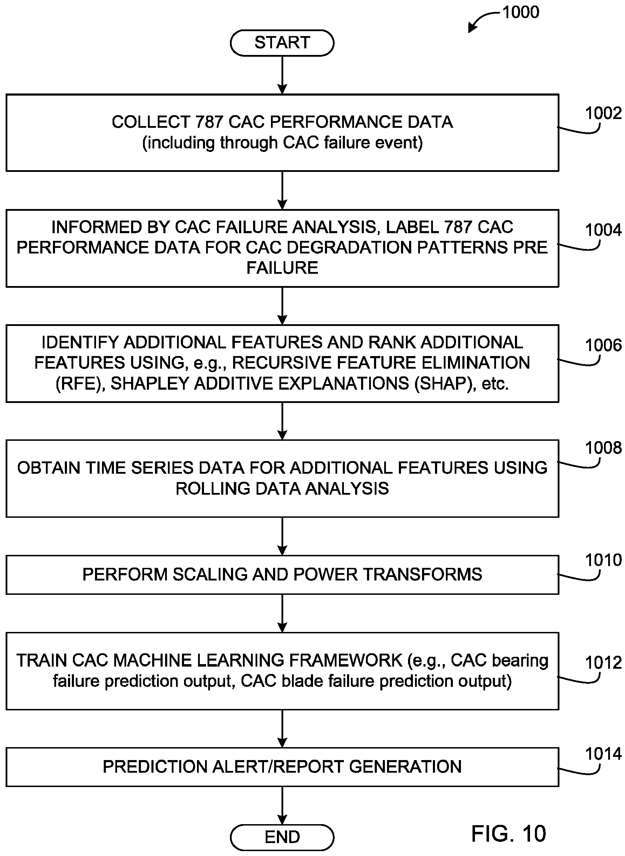

FIG. 10 illustrates a method 1000 for training a CAC failure machine learning framework, such as framework 956, to predict a failure state of at least one of the CAC compressor and the CAC motor. At block 1002, CAC performance data is collected, including performance data before and through an CAC failure event. In an example, over 88,000 CABIN AIR CONDITIONING (CACTCS) reports were collected from over 70 Boeing 787 aircraft, with approximately, 50 aircraft and approximately 100 total historical CAC failure events. At a block 1004, supervised annotation of the collected data from block 1002 is performed. For example, at the block 1004 maintenance professionals labeled the CAC performance data for degradation patterns that exist before the CAC failure event. Further such degradation patterns labeled in training data may depend on the CAC failure type. For example, in developing training data for performance degradation related to journal bearing, thrust bearing, and compressor thrust bearing, degradation patterns may be identified with respect to the two failure types, efficiency impossibly high and efficiency very low. The labeling at the block 1004 may be performed in various ways and may include a recursive process of labeling, testing, and then revised labeling, to determine which CAC degradation patterns to label in the training data set. In some examples, if the identified patterns were present in CAC performance data that did show degradation, such performance data would still be labeled course for using the training data, so as to not result in overfitting of the training data.

In addition to labeling the CAC performance data for CAC degradation patterns prior to failure, the method 1000, includes identifying additional features in the CAC performance data that may be identified (at block 1006). Such additional features may also be used for labeling the training data set. The block 1006 may further including applying a ranking of the additional features using SHapley Additive exPLanations (SHAP) or recursive feature elimination (RFE). Thus, the block 1006, applying a ranking of additional features, is able to perform feature selection that removes the weakest or weaker features until a smaller number (more highly correlative) features remain. FIG. 11 illustrates a listing of additional features 1100 in the CAC performance data that may be ranked and then assessed (e.g., using RFE or other feature reduction techniques) and included. In some examples, the data may be gathered as a single "snapshot" for a given flight (e.g., during cruise) while in other examples, data can be sampled at higher sampling rates at various points during airplane operation or throughout airplane operation. By way of example, the features 1100 include several categories of features: physical characteristics of aircraft components, calculated CAC operation data, and calculated CAC efficiency values. The physical characteristics include, for example, CAC compressor speed (e.g., "pack_cac_speed," "pack_cac_speed_er_kurt" (CAC compressor speed enroute (during cruise) kurtosis), and "pack cac_speed er std" (CAC compressor speed enroute standard deviation)); change in CAC speed over time; and average velocity of the CAC compressor. The calculated CAC operation data include power (e.g., "pack_cac_pwr") of the CAC compressor 322b and/or CAC compressor motor 324b; energy (e.g., "E_cac") of the CAC; rolling data of work and energy; CAC airflow mass flow rate (e.g., "pack_cac_ahvmassflw"); and airflow temperatures and pressures, both at the inlet and the outlet (e.g., "pack_cac_outtemp" and "pack_cac_outpress_er"). The CAC Efficiency values include CAC efficiency (e.g., "cac_Eff"), change in CAC efficiency over time, and CAC efficiency rolling over time. In some examples, the collected data may be from or corresponding to rotational components, where some or all of such data may be captured and processed using mathematical functions of sine (i.e., "sin") and/or cosine (i.e., "cos") of the measured value, instead of using the actual measured data itself.

At a block 1008, the method 1000 obtains from the CAC performance data time series data so that the training data includes not only the labeled patterns and underlying discretized, but also time-series data. That time-series data may include, for example, calculated rolling average and/or rolling standard deviation data for the CAC performance data. Such rolling data may be obtained for different cycles, such as for 30 cycle windows, 60 cycle windows, and 90 cycle windows. By obtaining rolling data and obtaining rolling data over different window cycles in the trained data, the resulting CAC failure machine learning framework may be configured to more accurately predict failure early in the CAC degradation process. In the illustrated example, optional scaling and power transforms are performed on the data from blocks 1008, 1006, and 1004.

At a block 1012, the data from block 1010 is fed to a CAC failure machine learning framework for training to predict CAC compressor 322b failure and CAC compressor motor 324b failure, thereby generating a trained CAC failure machine learning framework configured to generate prediction alerts and prediction reports (at a block 1014) in response to subsequently collected CAC performance data fed thereto. Prediction values from the trained model of 1012 include: CAC failure probability high or low or other (e.g., unequivocal); and CAC efficiency high, low, excessively high, excessively low, or other (e.g., unequivocal). Thus, in some examples, the trained CAC failure machine learning framework generates a CAC failure prediction value. In some examples, the framework may additionally output a CAC efficiency value and/or a CAC efficiency classification (high, low, excessively high, excessively low). Further, in some examples, the framework may generate a CAC failure prediction type, such as CAC compressor failure, CAC compressor motor failure, or failure in the CAC ducting. For the latter, the CAC failure machine learning framework may include a CAC failure prediction filter at an output stage, where that filter processes the prediction output to identify the type of CAC failure. In an example, the output stage may apply a CAC failure prediction filter that applies two or more failure patterns, each to identify one of either a CAC compressor failure or a CAC compressor motor failure.

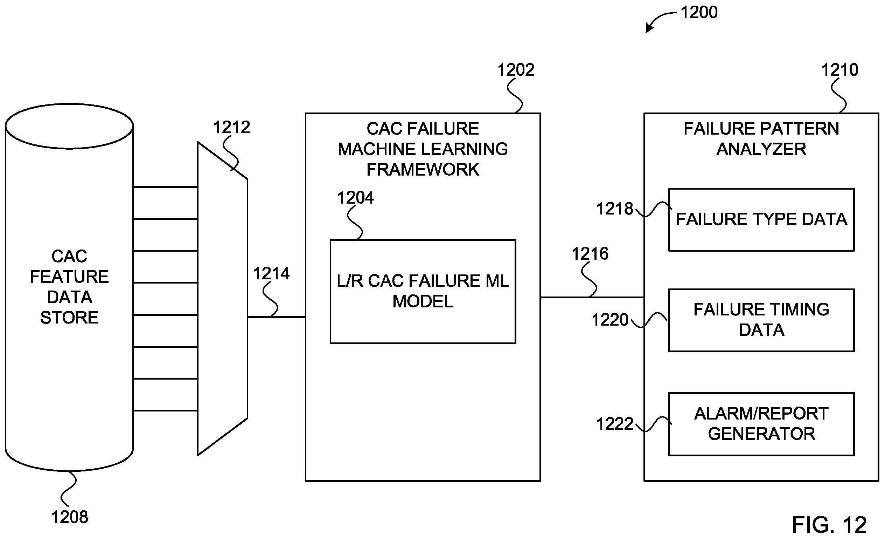

FIG. 12 illustrates an example machine learning architecture 1200, in accordance with the examples herein. The machine learning architecture 1200, for example, may be used to implement the method 1000 during training of the machine learning architecture 1200. In some examples, the machine learning architecture 1200 represents an already trained architecture. In examples described herein, the machine learning architecture 1200 is used for failure prediction in a CAC. The architecture 1200 includes a CAC failure machine learning framework 1202, which may be an example implementation of the CAC failure machine learning framework 956. Generally, the CAC failure machine learning framework 1202 may be configured to predict the failure of CACs (such as that of the B787 Boeing aircraft and other aircraft) within a prediction window, e.g., within the next 30 days, to minimize downtime and maintenance costs. In an example, the CAC failure machine learning framework 1202 may include one or more trained machine learning models that utilize an XGBoost algorithm and a feature selection pipeline that searches for the optimal number of features while simultaneously tuning for the best parameter configuration of gradient boosting models. The final chosen features may be the features 1100 or other features, selected using, for example, SHAP values or RFE as the feature selection strategy, and ranked by model-estimated importance on average over 100 trials, as support. In an example implementation, to evaluate the performance of the trained model or models of the CAC failure machine learning framework 1202, the model was trained on all failure cases, reserved one aircraft as a test set, and looped through all failure cases to obtain an average performance over different CAC failure cases. Metrics were used such as the Matthews correlation coefficient (MCC), precision, recall, and F1-score to evaluate the model's performance, achieving an average precision of 96.00%, a recall of 25.53%, an F1-score of 40.59%, and an MCC of 0.2857.

In an example, the final model was trained on all failure cases to predict CAC failure events by providing appropriate input features calculated from CAC reports in real time. In this way, the CAC failure machine learning framework 1202 was designed to predict failure events 30 days in advance. However, of course, the performance of the CAC failure machine learning framework 1202 may vary depending on the specific data provided to the trained model(s) and/or based on the training data.

In the illustrated example, the machine learning framework 1202 includes a trained (and/or to be trained) machine learning model. Specifically, the machine learning framework 1202 includes a Left/Right CAC failure machine learning model 1204, trained to implement any of the various CAC failure analysis techniques herein. In other examples, the machine learning framework 1202 may include additional or alternative machine learning models. A feature store 1208 stores CAC feature data, which may be labelled or pre-labeled training data, used for training the ML model 1204. The feature store 1208 may store feature data captured from aircraft sensors, etc. during operation of the aircraft for predicting CAC failure with the model 1204 trained. The CAC feature data, for example, may include the features 1100 or a subset thereof, such as the highest number of ranked features. Thus, the data store 1208 may store collected feature data of the CAC and other aircraft operations, as described herein, such as, flow sensor data, temperature sensor data, pressure sensor data, speed sensor data, and computer data herein. The data store 1208 may include training data, real-time captured data from an aircraft, historical real-time captured data from that aircraft, captured data from other aircraft, combinations thereof, etc. For example, the data store 1208 may include physical characteristics data of aircraft components of the CAC, calculated CAC operation data, and/or calculated CAC efficiency data. The CAC feature data from the data store 1208 is fed to a feature data extraction processor 1212 that may be configured to perform data processing operations such as power scaling, transforms, padding, noise reduction, etc., as well as feature reduction operations such as dimensionality reduction or recursive feature elimination. The resulting feature data 1214 is provided to the machine learning framework 1202.

During training, the feature data 1214 is provided to the machine learning framework 1202 for training the ML model 1204. During prediction operation, the feature data 1214 is provided to the machine learning framework 1202 for determining, through the ML models 1204, a prediction of CAC cycling failure. Thus, during prediction operation, the collected feature data 1214 may be performance data of the aircraft, such as the features 1100 or a subset thereof, or any of the measured data described herein for CAC failure prediction. In some examples a prediction score is provided for each failure type, e.g., for CAC failure prediction in the illustrated example. Thus, in some examples, a single prediction score is provided, even where the machine learning framework 1202 contains multiple trained machine learning models. For example, the ML model 1204 may have a Softmax layer that generates a single prediction score. In any case, a prediction output 1216 is generated by the machine learning framework 1202 and provided to a failure pattern analyzer 1210. The analyzer 1210 applies a heuristic to the prediction data 1216 to determine a predicted failure type, stored in data 1218, and a predicted failure time, stored in data 1220. The heuristic may be a threshold value (e.g., a prediction score above or a below a predetermined amount may indicate failure type and/or a time to failure). The heuristic may be a pattern of prediction scores over time, such as a rate of change in prediction scores over a window of time or a rate of acceleration (change in the rate of change) of predictions scores over a window of time. That is, in some examples, prediction scores are determined and stored over different data collection events, e.g., for a series of flights over time, and compared against one another in the analyzer 1210 to determine such trends that are indicative of the predicted type of failure and/or the predicted time to failure. Heuristics may be further used to determine if an alarm and/or report should be generated (at alarm/report generator 1222) to indicate to personnel of the predictions stored at 1218/1220 and/or the prediction score 1216.

Thus, in this way, the architecture 1200 may be used to implement of a process for failure prediction in a CAC that collects CAC feature data that may include physical characteristics data of aircraft components of the CAC, calculated CAC operation data, and/or calculated CAC efficiency data. In some examples, that process may then provide the collected CAC feature data to the CAC failure machine learning model 1204 trained using time series CAC feature training data. The CAC failure machine learning model 1204 is then able to generate a CAC failure prediction score (1216) and provide that CAC failure prediction score to the failure pattern analyzer 1210, where a heuristic may be applied to the CAC failure prediction score to determine a CAC failure prediction. A failure prediction report containing the CAC failure prediction can then be generated, stored, and/or displayed by the report generator 1222 for reporting the failure prediction of the CAC. That CAC failure prediction may include identification of a predicted CAC failure (such as a failure of CAC compressor 322b, CAC compressor motor 324b, or CAC ducting 302) and a predicted CAC failure timing (e.g., predicted time to failure, predicted cycles before failure).

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Additionally, certain embodiments are described herein as including logic or a number of routines, subroutines, applications, or instructions. These may constitute either software (e.g., code embodied on a machine-readable medium or in a transmission signal) or hardware. In hardware, the routines, etc., are tangible units capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired), or temporarily configured (e.g., programmed) to operate in a certain manner or to perform certain operations described herein. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple of such hardware modules exist contemporaneously, communications may be achieved through signal transmission (e.g., over appropriate circuits and buses) that connects the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of the example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods or routines described herein may be at least partially processor-implemented. For example, at least some of the operations of a method may be performed by one or more processors or processor-implemented hardware modules. The performance of certain of the operations may be distributed among the one or more processors, not only residing within a single machine, but also deployed across a number of machines. In some example embodiments, the processor or processors may be located in a single location (e.g., within a home environment, an office environment or as a server farm), while in other embodiments the processors may be distributed across a number of locations.

The performance of certain of the operations may be distributed among the one or more processors, not only residing within a single machine, but also deployed across a number of machines. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. For example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the description. This description, and the claims that follow, should be read to include one or at least one and the singular also includes the plural unless it is obvious that it is meant otherwise.

This detailed description is to be construed as an example only and does not describe every possible embodiment, as describing every possible embodiment would be impractical, if not impossible. One could implement numerous alternate embodiments, using either current technology or technology developed after the filing date of this application.

Those skilled in the art will recognize that a wide variety of modifications, alterations, and combinations can be made with respect to the above described embodiments without departing from the spirit and scope of the invention(s) disclosed herein, and that such modifications, alterations, and combinations are to be viewed as being within the ambit of the inventive concept(s).

**Claims**

1. A computer-implemented method for failure prediction in a cabin air compressor (CAC) system, the method comprising:

   calculating, at one or more processors, an airflow speed upstream of a CAC compressor based on a mass flow rate of the airflow and inlet pressure and inlet temperature of the airflow measured upstream of the CAC compressor inlet;
   calculating, at the one or more processors, an airflow speed downstream of the CAC compressor based on the mass flow rate of the airflow, and an outlet pressure and an outlet temperature of the airflow measured downstream of the CAC compressor outlet;
   calculating, at the one or more processors, an inlet energy of the airflow upstream of the CAC compressor based on the inlet airflow speed and the inlet temperature of the airflow;
   calculating, at the one or more processors, an outlet energy of the airflow downstream of the CAC compressor based on the mass flow rate of the airflow and the outlet temperature of the airflow;
calculating, at the one or more processors, work of a CAC compressor motor, coupled to the CAC compressor, based on an electrical input power of the CAC compressor motor, the airflow speed upstream of the CAC compressor, and a measured length of the CAC compressor flow path;
calculating, at the one or more processors, a change in energy of the airflow as a difference between the outlet energy and the inlet energy;
calculating, at the one or more processors, a CAC compressor efficiency as a ratio of the change in energy of the airflow to the work of the CAC compressor motor; and
predicting, at the one or more processors, a failure state of the CAC system based on a comparison of the CAC compressor efficiency to a failure prediction model.

2. The computer-implemented method of claim 1, further comprising flagging the CAC system for maintenance,said computer-implemented method preferably further comprising:

generating a maintenance action request; and
sending the electronic maintenance action request to a remote computer for initiating a maintenance action.

3. The computer-implemented method of claim 2, wherein the maintenance action comprises performing a CAC system leak check or a CAC system debris inspection or a CAC motor power quality check or a breakaway torque check of the CAC.

4. A computer-implemented method of predicting a failure state of a cabin air compressor (CAC) system via sensor measurements outside the CAC system, comprising:

receiving, at one or more processors, a first temperature of an airflow measured outside an aircraft;
receiving, at one or more processors, a first pressure of the airflow, a second pressure of the airflow, a second temperature of the airflow, and a mass flowrate of the airflow, each measured inside the CAC system;
receiving, at one or more processors, an input power of a CAC compressor motor measured inside a CAC system;
calculating, at one or more processors, a theoretical work of the CAC compressor based on the inlet temperature of the CAC airflow at the CAC compressor inlet, a compressor pressure ratio of the CAC compressor, a specific heat capacity of the CAC airflow at the CAC compressor inlet, and a specific heat ratio of the CAC airflow at the CAC compressor inlet;
calculating, at one or more processors, a change of energy of the airflow from a first position upstream of the CAC compressor to a second position downstream of the CAC compressor based on the first temperature, the second temperature, the first pressure, and the second pressure;
calculating, at one or more processors, a CAC compressor efficiency as a ratio of the change in energy of the CAC airflow across the CAC compressor to the theoretical work of the CAC compressor; and
predicting, at one or more processors, a failure state of the CAC based on comparing the compressor efficiency to a failure prediction model.

5. The computer-implemented method of claim 4, further comprising controlling the CAC in response to the prediction of the failure state by initiating a maintenance action, wherein initiating a maintenance action preferably includes performing a CAC system leak check or a CAC system debris inspection or a CAC motor power quality check or a breakaway torque check of the CAC.

6. A cabin air compressor (CAC) failure alert system, comprising:

a CAC ducting system having an airflow received from outside an aircraft;
a CAC compressor having an inlet and an outlet, the CAC compressor receiving the CAC airflow at the CAC compressor inlet; and
one or more processors and one or more memories configured to:

calculate energy of the airflow in the CAC airflow system at the inlet and the outlet of the CAC compressor, a work of the CAC compressor motor, a theoretical work of the CAC compressor, and an efficiency of the CAC compressor; and
predict a failure state of the CAC system by comparing the efficiency of the CAC compressor to a failure prediction model.

7. The system of claim 6, the processor further configured to initiate a maintenance action in response to predicting a failure state of the CAC system, wherein the maintenance action preferably includes a CAC system leak check or a CAC system debris inspection or a CAC motor power quality check or a breakaway torque check of the CAC.

8. The system of claim 6 or 7, further comprising at least one temperature sensor.

9. A computer-implemented method of using machine learning for failure prediction in a cabin air compressor (CAC) system, the computer-implemented method comprising:

   collecting, at one or more processors, CAC feature data comprising physical characteristics data of aircraft components of the CAC system, calculated CAC operation data, and/or calculated CAC efficiency data, the CAC feature data corresponding to aircraft runtime operation;
   providing, by the one or more processors, the collected CAC feature data to a machine learning model trained using time series CAC feature training data comprising time series physical characteristics training data, time series calculated CAC operation training data, and time series calculated CAC efficiency training data, at least a portion of the time series CAC feature training data corresponding to CAC failure events, CAC performance degradation, and CAC performance normal, the machine learning model being trained to generate a CAC failure prediction score; and
   generating, using the machine learning model, the CAC failure prediction score and providing the CAC failure prediction score to a failure pattern analyzer;
   the failure pattern analyzer, by the one or more processors, applying a heuristic to the CAC failure prediction score to determine a CAC failure prediction; and
   generating a failure prediction report containing the CAC failure prediction, wherein generating the failure prediction report comprises storing, transmitting, and/or displaying the failure prediction reporting.

10. The computer-implemented method of claim 9, wherein generating the failure prediction report comprises storing, transmitting, and/or displaying the failure prediction report including an identification of a predicted CAC failure and a predicted CAC failure timing, wherein generating the failure prediction report preferably comprises storing, transmitting, and/or displaying the failure prediction report including an identification of a predicted failure type selected from the group consisting of a CAC compressor, CAC compressor motor, and a CAC ducting, or, wherein generating the failure prediction report comprises storing, transmitting, and/or displaying the failure prediction reporting including an identification of a CAC predicted failure type.

11. The computer-implemented method of claim 9 or 10, wherein

   the physical characteristics data comprises CAC speed, change in CAC speed over time, CAC mass flow rate, change in CAC mass flow rate over time, CAC outlet pressure, change in CAC outlet temperature over time, CAC outlet temperature, and change in CAC outlet temperature over time;
   the calculated CAC operation data comprises work of a CAC system, energy change of a CAC compressor, rolling data of the work of the CAC, and rolling data of the energy change of the CAC; and
   the CAC feature data comprises a CAC efficiency and a rolling CAC efficiency rolling over time.

12. The computer-implemented method of one of claims 9 to 11, wherein the heuristic is selected from the group consisting of: a prediction score threshold value, an average prediction score over time, a prediction score pattern over time, and a rate of change in prediction score.

13. The computer-implemented method of one of claims 9 to 12, further comprising:
   obtaining the time series CAC feature training data from one or more data stores and providing the time series CAC feature training data to train the machine learning model, wherein the machine learning model preferably comprises a gradient boosting model.

14. The computer-implemented method of claim 13, further comprising applying the obtained time series CAC feature training data to a feature selection pipeline that performs SHapley Additive exPLanations (SHAP) reducing a total number of CAC features in the time series CAC feature training data before providing the time series CAC feature training data to train the machine learning model.

15. A non-transitory computer-readable medium, having stored thereon computer-executable instructions that, when executed by one or more processors, cause a computer to:

collect CAC feature data comprising physical characteristics data of aircraft components of the CAC, calculated CAC operation data, and/or calculated CAC efficiency data, the CAC feature data corresponding to aircraft runtime operation;

provide the collected CAC feature data to a machine learning model trained using time series CAC feature training data comprising time series physical characteristics training data, time series calculated CAC operation training data, and time series calculated CAC efficiency training data, at least a portion of the time series CAC feature training data corresponding to CAC failure events, CAC performance degradation, and CAC performance normal, the machine learning model being trained to generate a CAC failure prediction score;

generate, using the machine learning model, the CAC failure prediction score and provide the CAC failure prediction score to a failure pattern analyzer;

by the failure pattern analyzer, apply a heuristic to the CAC failure prediction score to determine a CAC failure prediction; and

generate a failure prediction report containing the CAC failure prediction, wherein generating the failure prediction report comprises storing, transmitting, and/or displaying the failure prediction reporting.

FIG. 1

FIG. 2

FIG. 3

FIG. 4

FIG. 5

START

502

| 602 |
| --- |
| CALCULATING AN INLET AIR SPEED OF THE CAC COMPRESSOR |

| 604 |
| --- |
| CALCULATING AN OUTLET AIR SPEED OF THE CAC COMPRESSOR |

| 606 |
| --- |
| CALCULATE AN INLET AIRFLOW ENERGY AT THE INLET OF THE CAC COMPRESSOR |

| 608 |
| --- |
| CALCULATE AN OUTLET AIRFLOW ENERGY AT THE INLET OF THE CAC COMPRESSOR |

| 610 |
| --- |
| CALCULATE A CHANGE IN ENERGY OF THE AIRFLOW ENERGY PASSING THROUGH THE CAC SYSTEM |

END

FIG. 6

START

504

RECEIVING ELECTRICAL INPUT POWER OF A CAC COMPRESSOR MOTOR

702

RECEIVING CALCULATED INLET AIR SPEED OF CAC AIRFLOW

704

RECEIVING A WORKING LENGTH OF THE CAC COMPRESSOR

706

CALCULATING A WORK OF THE CAC COMPRESSOR MOTOR

708

END

FIG. 7

FIG. 8

800

100

802

AIRCRAFT SENSORS — 804

822

**CAC HEALTH MONITORING SYSTEM**

842 — CONTROLLER

844 — PROCESSOR

| SENSOR DATA |
| CAC *EFF* DATA |
| CAC FAILURE STATE |
— 858

846 — MEMORY

852 — CAC SENSOR POLING

854 — CAC COMPRESSOR EFFICIENCY RATIO

856 — CAC FAILURE MODELER

LOCAL I/F — 834

NETWORK I/F — 836

UI/DISPLAY — 838

MAINTENANCE SERVER — 862

PROCESSOR

MEMORY

864

NETWORK — 806

826

824

**FIG. 9**

1000

START

COLLECT 787 CAC PERFORMANCE DATA
(including through CAC failure event)  — 1002

INFORMED BY CAC FAILURE ANALYSIS, LABEL 787 CAC
PERFORMANCE DATA FOR CAC DEGRADATION PATTERNS PRE
FAILURE  — 1004

IDENTIFY ADDITIONAL FEATURES AND RANK ADDITIONAL
FEATURES USING, e.g., RECURSIVE FEATURE ELIMINATION
(RFE), SHAPLEY ADDITIVE EXPLANATIONS (SHAP), etc.  — 1006

OBTAIN TIME SERIES DATA FOR ADDITIONAL FEATURES USING
ROLLING DATA ANALYSIS  — 1008

PERFORM SCALING AND POWER TRANSFORMS  — 1010

TRAIN CAC MACHINE LEARNING FRAMEWORK (e.g., CAC bearing
failure prediction output, CAC blade failure prediction output)  — 1012

PREDICTION ALERT/REPORT GENERATION  — 1014

END

FIG. 10

FIG. 11

FIG. 12